# EUROPÄISCHE PATENTSCHRIFT

(11) **EP 3 994 361 B1**
(45) Veröffentlichungstag und Bekanntmachung des Hinweises auf die Patenterteilung: **09.10.2024**
(21) Anmeldenummer: 20743595.9
(22) Anmeldetag: 01.07.2020
(51) Int. Cl.: F04D 29/42, B33Y 80/00, F04D 29/58

(54) **PUMPENANORDNUNG MIT TEMPERIERBAREM GEHÄUSETEIL**
PUMP DEVICE WITH COOLED OR HEATED CASING PART
DISPOSITIF DE POMPE AVEC CARTER REFROIDI OU CHAUFFÉ

(30) Priorität: 01.07.2019 DE 102019004538; 10.12.2019 DE 102019008561; 30.06.2020 DE 102020003928; 30.06.2020 DE 102020003929
(43) Veröffentlichungstag der Anmeldung: 11.05.2022
(73) Patentinhaber: KSB SE & Co. KGaA, 67227 Frankenthal (DE)
(72) Erfinder: BUTHMANN, Lukas, 67227 Frankenthal (DE); GRÖSCHEL, Jürgen, 67227 Frankental (DE)
(86) Internationale Anmeldenummer: PCT/EP2020/068532
(87) Internationale Veröffentlichungsnummer: WO 2021/001428

(56) Entgegenhaltungen:
- WO-A1-2016/116428
- FR-A1- 2 008 305
- US-A- 3 936 220
- US-A1- 2006 171 801
- US-A1- 2007 000 648

## Beschreibung

Die Erfindung betrifft eine Pumpenanordnung gemäß des Oberberiffs des Anspruchs 1 und ein Verfahren gemäß des Oberbegriffs des Anspruchs 9.

Derartige Pumpenanordnungen werden oftmals in Industrieanlagen, insbesondere in der Chemie und Petrochemie, eingesetzt. Dabei werden häufig Medien gepumpt bzw. gefördert, welche nur bei einer bestimmten Temperatur förderbar bzw. pumpbar sind.

Ein derartiges Medium ist beispielsweise Schwefel. Sinkt oder steigt die Temperatur während des Pumpprozesses an einigen Stellen in der Pumpe zu stark, kann das Medium auskristallisieren und somit einen Trockenlauf der Pumpe verursachen. Weiterhin kann ein derartiges Auskristallisieren auch das Fördermedium verunreinigen.

Ein weiteres Beispiel ist die Förderung von Schweröl oder Bitumen. Zur Förderung dieser Medien müssen die eingesetzten Pumpen beispielsweise bei sehr tiefen Temperaturen vorgeheizt werden, um ein Trockenlaufen der Pumpe zu vermeiden, da Schweröl und Bitumen ohne eine vorherige Erwärmung zu viskos sind, um pumpbar zu sein. Unter anderem bei Prozesspumpen ist eine genaue Regulierung der Temperatur von entscheidender Bedeutung, da schwankende Temperaturen einen gesamten Anlagenprozess stören können.

Bekannte beheizbare Spiralgehäuse haben den Nachteil, dass sie aus mehreren Einzelteilen bestehen, welche meist durch Schweißen miteinander verbunden werden. An den Schweißstellen kann es zu Leckagen kommen, wenn diese nicht korrekt verschweißt sind, was die Funktion der Pumpe wesentlich verschlechtert.

Zudem gestaltet es sich bei derartigen Schweißkonstruktionen schwierig, das komplette Gehäuse inklusive der Flansche gleichmäßig zu temperieren.

In der WO 2016/116428 A1 wird eine Pumpe beschrieben, deren Gehäuse zur Beheizung einen Hohlraum aufweist, der von einem Temperiermedium durchströmt wird.

Die US 2007/0000648 A1 beschreibt ein System mit einer Pumpe zur Kühlung von elektronischen Komponenten.

Aus der FR 2 008 305 A1 ist eine Tauchpumpe mit einer Antriebseinrichtung bekannt, für deren Kühlung ein mechanisch angetriebener und in sich geschlossener Kühlmittelkreislauf vorgesehen ist.

Die US 3 936 220 A offenbart eine Pumpe für heiße und kalte Medien mit einer die Pumpe umgebenden Mantelkonstruktion durch die ein Temperatursteuermedium strömt, das das zu fördernde Medium auf eine gewünschte Temperatur hält.

Aus der US 2006/171801 A1 ist eine Kühlkörpervorrichtung mit einem Kühler und einer Kreiselpumpe bekannt, wobei die Kreiselpumpe Wärme von der wärmeerzeugenden Komponente abführt.

Bei herkömmlichen Pumpen können die an den Stutzen bzw. Einlass- und Auslassöffnungen anliegenden Kräfte und Momente das Gehäuse verformen und zu einem Anlaufen des Laufrads an angrenzende Bauteile der Pumpe führen.

Auch der Punkt im Prozessfluss / der Ort an der Pumpe, an dem eine Gleitringdichtung meist angeordnet ist, insbesondere der Bereich zwischen der Welle und dem Gehäusedeckel einer Pumpe, hat sich in der Praxis als ein kritischer Bereich erwiesen, in dem es relativ häufig zu Problemen bezüglich der Bereitstellung der erforderlichen Temperatur kommt.

Die Beheizung des Gehäusedeckels / Spiralgehäuses der Pumpe reicht an diesem Punkt häufig nicht aus, um eine optimale Temperatur zur Förderung eines bestimmten Mediums zu erreichen.

Zudem haben konventionelle Dichtungsdeckel den zusätzlichen Nachteil, dass sie aus mehreren Einzelteilen bestehen, welche meist durch Schweißen miteinander verbunden sind. An den Schweißstellen kann es zu Leckagen kommen, wenn diese nicht korrekt verschweißt sind, was die Funktion der Pumpe weiter verschlechtert.

Zudem gestaltet sich bei derartigen Dichtungsdeckeln das zusätzliche Anordnen von Leitungen, welche durch eine etwaige in dem Dichtungsdeckel angeordnete Kühl-I Heizkammer verlaufen, schwierig bzw. ist in der Praxis nicht realisierbar. Beispielsweise müsste zur Bereitstellung einer externen Zirkulation bei einem herkömmlichen Dichtungsdeckel der Heizraum des Dichtungsdeckels durchgebohrt werden.

Der vorliegenden Erfindung liegt die Aufgabe zugrunde, die Mängel der aus dem Stand der Technik bekannten Vorrichtungen abzumildern oder gar ganz zu beheben. Konkret ist es eine Aufgabe der vorliegenden Erfindung eine Pumpenanordnung bereitzustellen, mittels dessen die Förderung von Medien bei optimaler Fördertemperatur gewährleistet ist.

Diese Aufgabe wird durch eine Pumpenanordnung mit den Merkmalen des Anspruchs 1 gelöst.

Als besonders vorteilhaft hat sich erwiesen, dass in der Temperierkammer eine Vielzahl von Streben vorgesehen sind, welche die Innenwandung mit der Außenwandung verbinden und im Wesentlichen konzentrisch zur Drehachse angeordnete kreisartig verlaufende Kanäle bilden. Dadurch ist sichergestellt, dass selbst bei Verstopfung eines Kanals oder sogar von mehreren Kanälen das Bauteil beheizt oder gekühlt werden kann.

Damit alle Kanäle gleichzeitig durchströmt werden können, sind in der Temperierkammer die erste Sammelkammer und die zweite Sammelkammer ausgebildet.

Damit das Kühl- oder Heizmedium bedienungsfreundlich der Temperierkammer zugeführt bzw. abgeführt werden kann, ist die erste Anschlussvorrichtung für eine Versorgungsleitung vorgesehen, über die das Kühl- oder Heizmedium zum Temperieren des Hydraulikgehäuses in die Temperierkammer einströmt. Desweiteren ist die zweite Anschlussvorrichtung zum Anschließen einer Versorgungsleitung vorgesehen, über die das Kühl- oder Heizmedium aus der Temperierkammer wieder ausströmt.

Dabei hat es sich als besonders vorteilhaft erwiesen, dass in der Temperierkammer im Wesentlichen konzentrisch zur Drehachse angeordneter kreisartig verlaufende Kanäle ausgebildet sind.

Dass eine dritte Sammelkammer ausgebildet ist vereinfacht im Bedarfsfall ein vollständiges entleeren der Kanäle.

Um bei Bedarf eine vollständige Entleerung der Temperierkammer auf einfache Art und Weise sicherzustellen, weist das temperierbare Bauteil eine mit der dritten Sammelkammer verbundene dritte Anschlussvorrichtung zum Anschließen einer weiteren Leitung auf.

In vorteilhafterweise weist der wenigstens eine Kanal bzw. die Kanäle eine definierte Strukturierung auf, die zur Maximierung von Turbulenzen in dem Kühl- oder Heizmedium und somit zur Maximierung des Wärmeaustauschs dient.

Um eine gleichmäßige Temperaturverteilung gewährleisten zu können, ist es vorteilhaft, Außenwandung und Innenwandung möglichst dünn auszubilden. Damit das temperierbare Bauteil dem Druck im Inneren sicher standhalten kann, weist vorteilsweise das Bauteil eine Stützstruktur auf. Die Stützstruktur nimmt die beispielsweise an Saugstutzen und Druckstutzen auftretenden Kräfte und Momente auf und leitet diese ab. Zudem wird eine Versteifung des Bauteils bei minimalen Eigengewicht erzielt, wodurch z.B. das Risiko des Anschleifens des Laufrads an einem üblicherweise im Hydraulikgehäuse untergebrachten Spaltring oder an einem Teil des Hydraulikgehäuses minimiert. Die an der Außenwandung durch Materialanhäufung ausgebildete Stützstruktur stützt und entlastet somit sowohl die relativ dünne Innenwandung als auch die relativ dünne Außenwandung des Hydraulikgehäuses.

Dabei ist es besonders vorteilhaft, wenn die Stützstruktur definierte Bauelemente des Bauteiles miteinander verbindet, insbesondere Gehäusefüße, Saugstutzen, Druckstutzen und Verbindungsstellen, an welche weitere Bauteile der Pumpenanordnung befestigbar sind.

Eine weitere vorteilhafte Ausgestaltung sieht vor, dass die Stützstruktur im Wesentlichen horizontal, vertikal und diagonal verlaufende Materialanhäufungen aufweist, die Knoten- oder Kreuzungspunkte bilden.

Als besonders vorteilhaft hat sich herausgestellt, dass freie Enden der Stützstruktur Sacklöcher zur Aufnahme von geeigneten Befestigungsmitteln, insbesondere Schrauben oder Gewindebolzen, aufweisen. Dabei sind vorteilhafterweise Innengewinde vorgesehen, in die die Befestigungsmittel einschraubbar sind.

Eine weiterer Aufgabe der vorliegenden Erfindung besteht darin, ein Verfahren zur Herstellung eines Hydraulikgehäuses für eine Pumpenanordnung als einstückiges Bauteil mittels 3D-Drucks, insbesondere metallischen 3D-Drucks, Selektiven Laser-Schmelzens (SLM), oder mittels Feingusses, bereitzustellen.

Weitere Vorteile, Merkmale und Effekte der vorliegenden Erfindung ergeben sich aus den nachstehenden Figuren. Hierbei zeigen
- Fig. 1: einen Längsschnitt durch eine Pumpenanordnung mit einem erfindungsgemäßen Hydraulikgehäuse,
- Fig. 2: einen Längsschnitt durch das erfindungsgemäße Hydraulikgehäuse in vergrößerter Darstellung,
- Fig. 3: eine perspektivische Darstellung des Hydraulikgehäuses gemäß Fig. 2,
- Fig. 4: einen Längsschnitt durch eine weitere Ausführungsform des Hydraulikgehäuses und
- Fig. 5: eine schematische Darstellung des Hydraulikgehäuses.
- Fig. 6: verschiedene Ansichten eines nicht erfindungsgemäßen Dichtungsdeckels und
- Fig. 7: verschiedene Ansichten eines nicht erfindungsgemäßen Dichtungsdeckels mit einem Anschluss für Quench-Medium

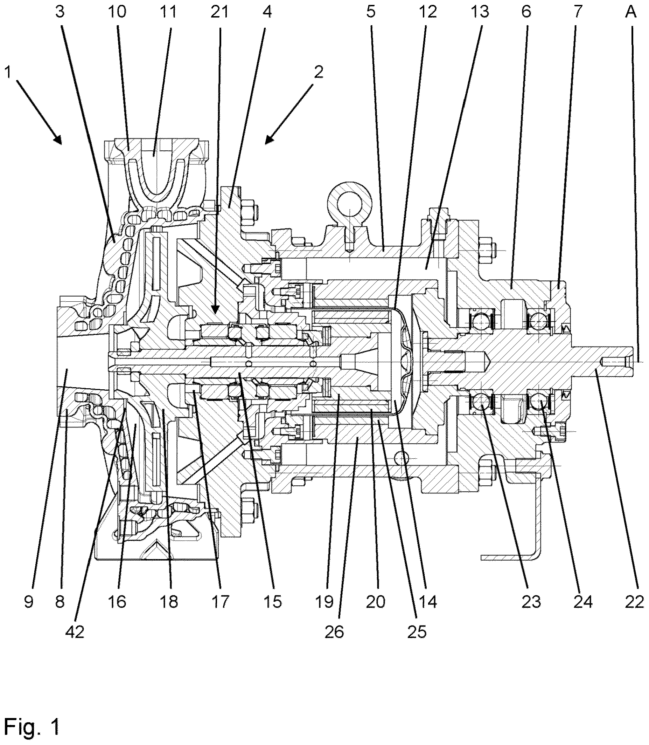

Die Fig. 1 zeigt eine Pumpenanordnung 1 in Form einer Magnetkupplungspumpenanordnung. Die Pumpenanordnung 1 weist ein mehrteiliges Pumpengehäuse 2 einer Kreiselpumpe auf, das ein temperierbares als Hydraulikgehäuse ausgebildetes Bauteil 3, einen Gehäusedeckel 4, eine Lagerträgerlaterne 5, einen Lagerträger 6 und einen Lagerdeckel 7 umfasst.

Das im vorliegenden Beispiel als Hydraulikgehäuse ausgebildete Bauteil 3 weist an einem Saugstutzen 8 eine Einlassöffnung 9 zum Ansaugen eines Fördermediums und an einem Druckstutzen 10 eine Auslassöffnung 11 zum Ausstoßen des Fördermediums auf. Der Gehäusedeckel 4 ist an der der Einlassöffnung 9 gegenüberliegenden Seite des Hydraulikgehäuses 3 angeordnet. An der dem Hydraulikgehäuse 3 abgewandten Seite des Gehäusedeckels 4 ist die Lagerträgerlaterne 5 befestigt. Der Lagerträger 6 ist an der dem Gehäusedeckel 4 gegenüberliegenden Seite der Lagerträgerlaterne 5 angebracht. Der Lagerdeckel 7 ist wiederum an der der Lagerträgerlaterne 5 abgewandten Seite des Lagerträgers 6 befestigt.

Ein Spalttopf 12 ist an der dem Hydraulikgehäuse 3 abgewandten Seite des Gehäusedeckels 4 befestigt und erstreckt sich zumindest teilweise durch einen vom Pumpengehäuse 2, insbesondere vom Gehäusedeckel 4, von der Lagerträgerlaterne 5 und von dem Lagerträger 6 begrenzten Innenraum 13. Der Spalttopf 12 dichtet eine von ihm umschlossene Kammer 14 hermetisch gegenüber dem Innenraum 13 ab.

Eine um eine Drehachse A drehbare Laufradwelle 15 erstreckt sich von einer mittels des Hydraulikgehäuses 3 und des Gehäusedeckels 4 begrenzten Strömungskammer 16 durch eine in dem Gehäusedeckel 4 vorgesehene Öffnung 17 in die Kammer 14.

An einem innerhalb der Strömungskammer 16 liegenden Wellenende der Laufradwelle 15 ist ein Laufrad 18 befestigt, am gegenüberliegenden Wellenende ist ein innerhalb der Kammer 14 angeordneter Innenrotor 19 angeordnet. Der Innenrotor 19 ist mit mehreren Magneten 20 bestückt, die an der dem Spalttopf 12 zugewandten Seite des Innenrotors 19 angeordnet sind.

Zwischen Laufrad 18 und Innenrotor 19 ist eine mit der um die Drehachse A drehbar antreibbaren Laufradwelle 15 in Wirkverbindung stehende Lageranordnung 21 angeordnet.

Ein nicht dargestellter Antriebsmotor, vorzugsweise ein Elektromotor, treibt eine Antriebswelle 22 an. Die um die Drehachse A drehbar antreibbare Antriebswelle 22 ist im Wesentlichen koaxial mit der Laufradwelle 15 angeordnet. Die Antriebswelle 22 erstreckt sich durch den Lagerdeckel 7 sowie den Lagerträger 6 und ist in zwei in dem Lagerträger 6 untergebrachten Kugellagern 23, 24 gelagert. Am freien Ende der Antriebswelle 22 ist ein mehrere Magnete 25 tragender Außenrotor 26 angeordnet. Die Magnete 25 sind an der dem Spalttopf 12 zugewandten Seite des Außenrotors 26 angeordnet. Der Außenrotor 26 erstreckt sich zumindest teilweise über den Spalttopf 12 und wirkt mit dem Innenrotor 19 zusammen, derart, dass der rotierende Außenrotor 26 mittels magnetischer Kräfte den Innenrotor 19 und somit die Laufradwelle 15 und das Laufrad 18 ebenfalls in eine Rotationsbewegung versetzt.

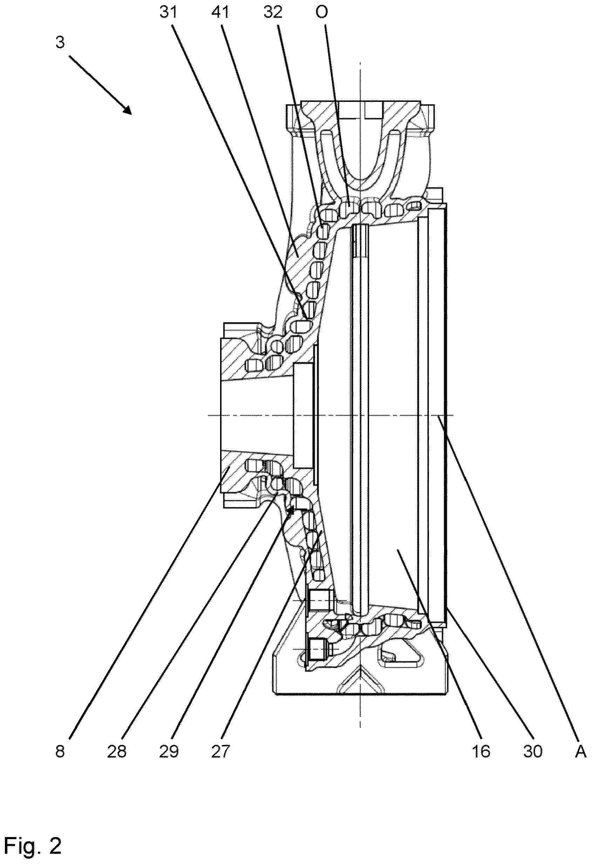

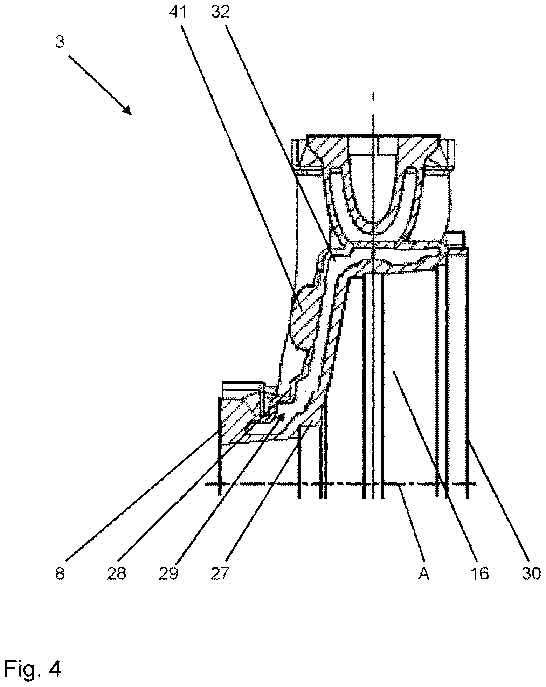

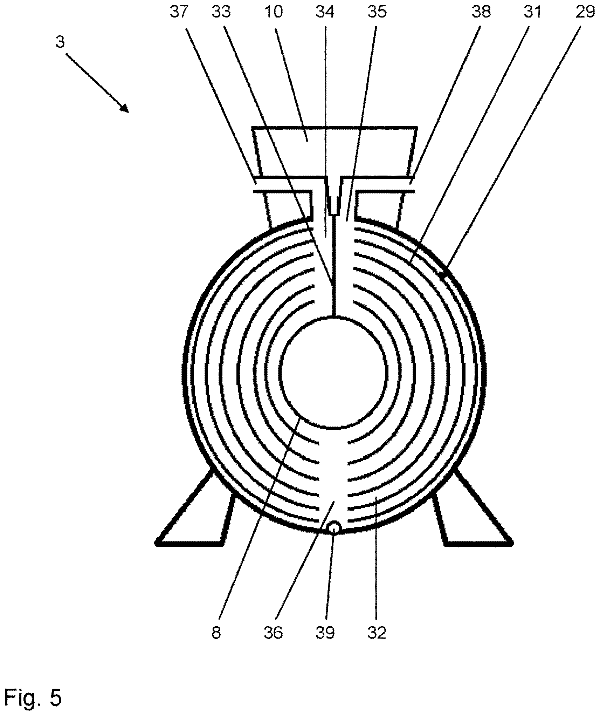

Die Fig. 2, 3 und 4 zeigen beispielhafte Ausführungen des Hydraulikgehäuses 3 im Detail. Das Hydraulikgehäuse 3 weist eine erste Wandung bzw. Innenwandung 27 und eine von der Innenwandung 27 beabstandete zweite Wandung bzw. Außenwandung 28 auf. Innenwandung 27 und Außenwandung 28 bilden bzw. begrenzen eine Temperierkammer 29. Die Temperierkammer 29 erstreckt sich zwischen Innenwandung 27 und Außenwandung 28 und im Wesentlichen über den die Strömungskammer 16 begrenzenden Teil der Innenwandung 27. Das heißt, von einer Fläche 30 des Hydraulikgehäuses 3, an welcher der Gehäusedeckel 4 anliegt, über das ganze Hydrauligehäuse 3 bis zum Saugstutzen 8. Bei dem gezeigten Ausführungsbeispiel sind in der Temperierkammer 29 eine Vielzahl von Streben 31 vorgesehen, welche die Innenwandung 27 mit der Außenwandung 28 verbinden. Dadurch entstehen, wie schemtisch in Fig. 5 dargestellt, kreisartig verlaufende Kanäle 32, die im Wesentlichen konzentrisch zur Drehachse A angeordnet sind. Wird auf die Streben verzichtet, entsteht ein kreisartig verlaufender Kanal 32, der im Schnitt, wie er in Fig. 4 dargestellt ist, einen im Wesentlichen S-förmigen Verlauf aufweist.

Wie in der Fig. 5 gezeigt, sind in einem Bereich, der sich vom Saugstutzen 8 zum Druckstutzen 10 erstreckt, die Streben 31 und die Kanäle 32 nicht durchgängig, d.h. sie sind unterbrochen. Ein in der Fig. 5 dargestellter, sich vom Druckstutzen 10 zum Saugstutzen 8 erstreckender Steg, der Innenwandung 27 und Außenwandung 28 verbindet, bildet eine Trennwand 33 in der Temperierkammer 29. Die Streben 31 berühren die Trennwand 33 dabei nicht, sodass, wie in Fig. 5 schematisch gezeigt, in der Temperierkammer 29 eine erste Sammelkammer 34 und eine zweite Sammelkammer 35 gebildet werden. Erste Sammelkammer 34 und zweite Sammelkammer 35 weisen beginnend von einem Bereich nahe des Saugstutzens 8 eine im Wesentlichen radiale Ausdehnung, insbesondere in Richtung Druckstutzen 10 auf. In einem sich radial erstreckenden Bereich, der bei dem stehenden Hydraulikgehäuse 3 unterhalb des Saugstutzens 8 liegt, sind die Streben 31 ebenfalls nicht durchgängig ausgebildet. Dadurch wird eine dritte, in der Fig. 5 schematisch gezeigte Sammelkammer 36 gebildet.

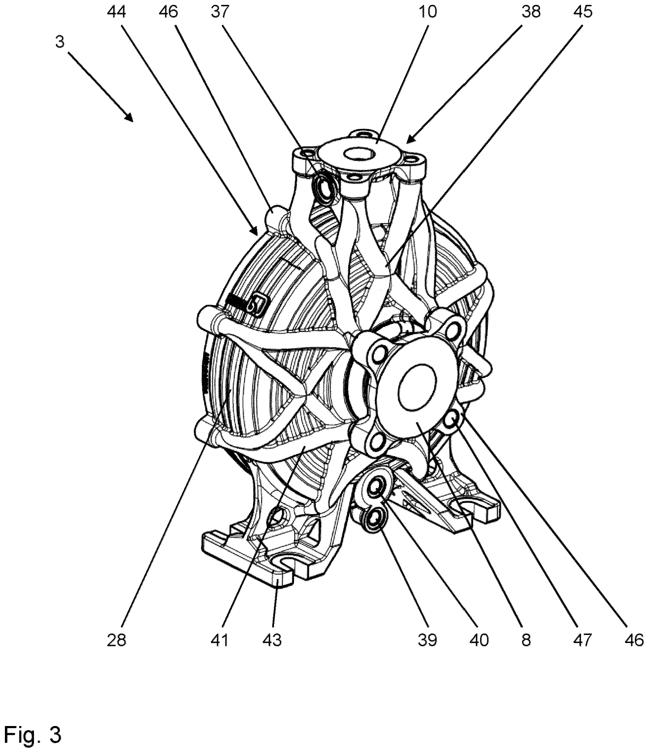

Wie in der Fig. 3 gezeigt, ist am Druckstutzen 10 eine erste Anschlussvorrichtung 37 vorgesehen, über die ein Kühl- oder Heizmedium zum Temperieren, d. h. zum Kühlen und/oder Beheizen des Hydraulikgehäuses 3 in die Temperierkammer 29 einströmen kann. Eine zweite Anschlussvorrichtung, auf die das Bezugszeichen 38 verweist, über die das Kühl- oder Heizmedium aus der Temperierkammer 29 wieder ausströmen kann, ist der ersten Anschlussvorrichtung 37 gegenüberliegend angeordnet. Die Anordnung der zweiten Anschlussvorrichtung 38 ist am besten in der Fig. 5 erkennbar.

Das Hydraulikgehäuse 3 weist eine mit der dritten Sammelkammer 36 verbundene dritte Anschlussvorrichtung 39 auf, die für die vollständige Entleerung der Temperierkammer 29 vorgesehen ist. Die Anschlussvorrichtung 39 ist derart angeordnet, dass die Entleerung der Temperierkammer 29 im Wesentlichen in axialer Richtung erfolgt. Die Anschlussvorrichtung 39 ist zum vollständigen Ablassen des enthaltenen Kühl- bzw.Heizmediums am tiefsten Punkt der Temperierkammer 29 ausgebildet.

Der Kanal 32 bzw. die Kanäle 32 weisen eine definierte Strukturierung O auf, die zur Maximierung von Turbulenzen in dem Kühl- oder Heizmedium und somit zur Maximierung des Wärmeaustauschs dienen. Bei dem gezeigten Ausführungsbeispiel gibt es Kanäle 32, die beispielsweise kreisrund, oval, im Wesentlichen L- oder V-örmig ausgebildet sind oder Vertiefungen aufweisen. Die Streben 31 können z.B. ein flügelartiges Profil aufweisen. Der Kanal 32 bzw. die Kanäle 32 sowie die Streben 31 können auch bionischen Strukturen, beispielsweise ein haifischhautähnliche Struktur aufweisen. Bei der beispielhaft gezeigten Ausführungsform weist die Außenwandung 28 an der zur Au-βenumgebung gerichteten Seite eine definierte Oberflächenstrukturierung O, insbesondere eine wellenartig ausgebildete Oberflächenstrukturierung O, auf.

Wie aus den Fig. 2 und 3 ersichtlich, weist das Hydraulikgehäuse 3 eine vierte Anschlussvorrichtung 40 auf, die für die vollständige Entleerung der Strömungskammer 16 bestimmt ist. Die Anschlussvorrichtung 40 ist über der Anschlussvorrichtung 39 angeordnet. Die Anschlussvorrichtung 40 ist derart angeordnet, dass die Entleerung der Strömungskammer 16 im Wesentlichen in axialer Richtung erfolgt.

Zum Kühlen oder Beheizen des Hydraulikgehäuses 3 strömt das Kühl- oder Heizmedium über die erste Anschlussvorrichtung 37 in die erste Sammelkammer 34 der Temperierkammer 29 und von dort in die fluidtechnich direkt miteinander in Verbindung stehenden einzelnen Kanäle 32 bis schließlich in die zweite Sammelkammer 35 und von dort über die zweite Anschlussvorrichtung 38 aus der Temperierkammer 29. Dabei wird eine gleichmäßige Temperaturverteilung über das Hydraulikgehäuse 3 erreicht.

Es versteht sich, dass das Kühl- oder Heizmedium auch über die zweite Anschlussvorrichtung 38 der Temperierkammer 29 zugeführt werden kann und über die erste Anschlussvorrichtung 37 aus der Temperierkammer 29 ausströmt.

Wie in den Fig. 2 bis 4 gezeigt, weist das Hydraulikgehäuse 3 zudem eine Stützstruktur 41 auf, welches die an Saugstutzen 8 und Druckstutzen 10 auftretenden Kräfte und Momente aufnimmt und ableitet. Zudem wird dadurch eine Versteifung des Hydraulikgehäuse 3 erzielt, welche das Risiko des Anschleifens des Laufrads 18 an einem in der Fig. 1 gezeigten Spaltring 42 oder an einem Teil des Hydraulikgehäuses 3 minimiert. Die an der Außenwandung 28 durch Materialanhäufung ausgebildete Stützstruktur 41 stützt und entlastet somit sowohl die relativ dünne Innenwandung 27 als auch die relativ dünne Außenwandung des Hydraulikgehäuses 3. Die Stützstruktur 41 verbindet definierte Bauelemente des Hydraulikgehäuses miteinander, insbesondere Gehäusefüße 43, Saugstutzen 8, Druckstutzen 10 und Verbindungsstellen 44, an welche weitere Bauteile der Pumpenanordnung befestigbar sind, beispielsweise der Gehäusedeckel 4.

Die Stützsruktur 41 ist kraftflussoptimiert bzw. topologieoptimiert ausgeführt. Die Stützstruktur 41 weist im Wesentlichen horizontal, vertikal und diagonal verlaufende Materialanhäufungen auf, die Knoten- oder Kreuzungspunkte 45 bilden. Freie Enden 46 der Stützstruktur 41 weisen Sacklöcher 47 auf, die zur Aufnahme von nicht dargestellten Befestigungsmitteln, beispielsweise Schrauben oder Gewindebolzen, vorgesehen sind. Die Fig. 1 zeigt eine Pumpenanordnung 1 in Form einer Magnetkupplungspumpenanordnung. Es ist jedoch ersichtlich, dass das erfindungsgemäße Hydraulikgehäuse 3 bei anderen Pumpenanordnungen, beispielsweise Spaltrohrmotorpumpen, Inlinepumpen beliebige Pumpen ohne Magnetkupplung, anwendbar ist.

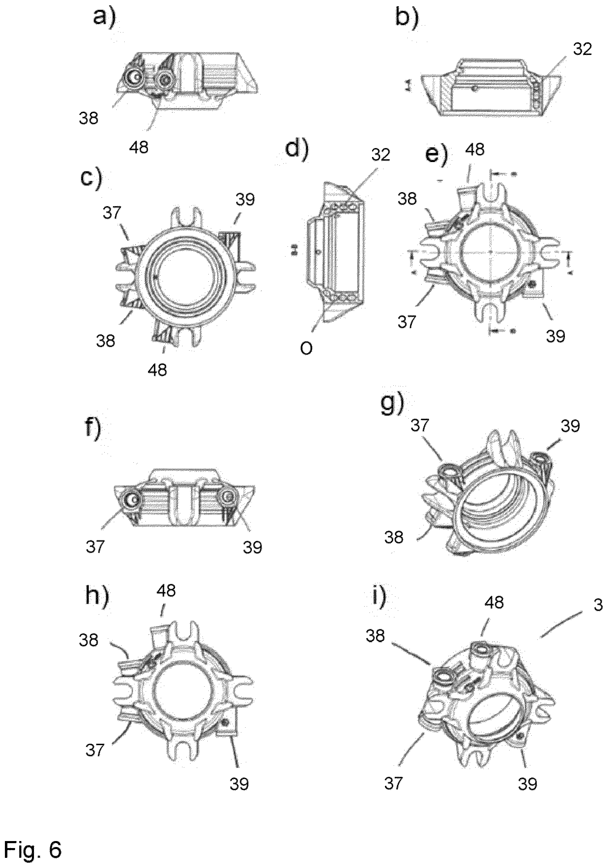

Wie in den Figuren 6a -6i gezeigt, weist ein nicht erfindungsgemäßes, temperierbares Bauteil 3, das in dem gezeigten Beispiel als ein Dichtungsdeckel, insbesondere für die Unterbringung einer Gleitringdichtung, ausgebildet ist, einen Anschlussvorrichtung 37 bzw. Einlass für Kühl- / Heizmedium und eine zweite Anschlussvorrichtung 38 bzw. Auslass für Kühl- / Heizmedium auf. Erste Anschlussvorrichtung 37 und zweite Anschlussvorrichtung 38 gegenüberliegend angeordnet. Das Temperiermedium wird somit also durch das ringförmige Bauteil 3 geführt. Wie zur Fig. 5 beschrieben kann eine hier nicht gezeigte Trennwand in der Temperierkammer vorgesehen sein, sodass in der Temperierkammer eine erste Sammelkammer und eine zweite Sammelkammer gebildet werden.

Das Kühl- / Heizmedium zirkuliert in wenigstens einem Kanal 32, welche im Innern des temperierbaren Bauteils 3 ausgebildet ist und mit definierten Oberflächenstrukturierungen O zur Maximierung von Turbulenzen in dem Kühl- / Heizmedium und somit zur Maximierung des Wärmeaustauschs versehen sind.

Zudem weist der Dichtungsdeckel 3 eine dritte Anschlussvorrichtung 39 auf, welche für das Ablassen des enthaltenen Kühl-/Heizmediums am tiefsten Punkt des Kühl-/Heizkanals 32 bzw. der beim Dichtungsdeckel nicht gezeigten Temperierkammer genutzt werden kann. Für eine externe Zirkulation kann eine fünfte Anschlussvorrichtung 48 vorgesehen sein, die über die dritte Anschlussvorrichtung wieder aus dem Bauteil 3 ausgeleitet werden kann..

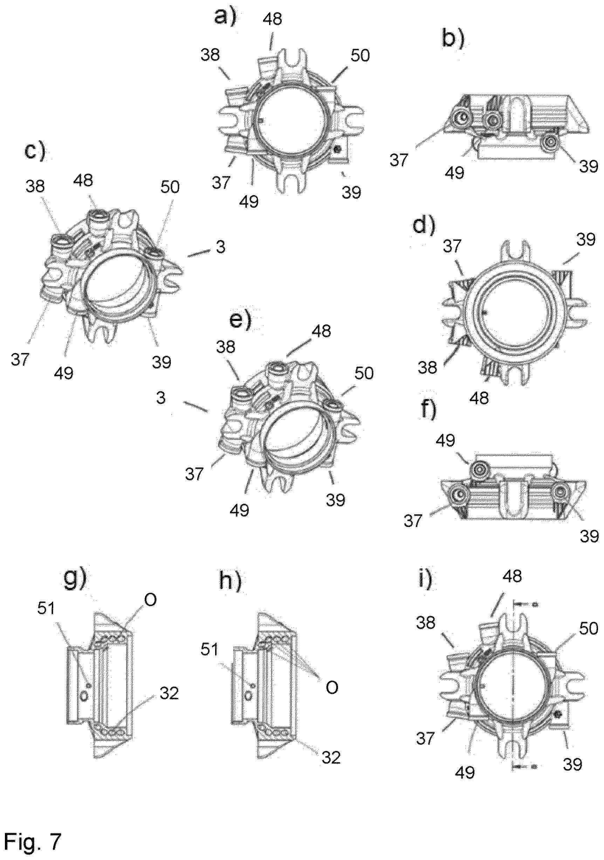

Wie in den Figuren 7a -7i gezeigt, kann das nicht erfindungsgemäße temperierbare Bauteil 3 1 zudem mit einer sechsten Anschlussvorrichtung 49 bzw. Einlass für Quench-Medium und einer siebten Anschlussvorrichtung 50 bzw. Auslass für Quench-Medium ausgestattet sein.

In den Figuren 7g und 7h ist zudem ersichtlich, dass in dem temperierbaren Bauteil 3 eine Verdrehsicherung 51 einer Gleitringdichtung integriert ist.

Die vorstehend beschriebenen Gehäuseteile 3 für eine Pumpenanordnung 1 werden vorteilhafterweise als einstückiges Bauteil mittels 3D-Drucks, insbesondere metallischen 3D-Drucks, Selektiven Laser-Schmelzens (SLM), oder mittels Feingusses hergestellt.

## Patentansprüche

1. Pumpenanordnung (1) zur Förderung von bei bestimmten Temperaturen förderbaren Medien mit
einer von einem Hydraulikgehäuse (3) und einem Gehäusedeckel (4) gebildeten Strömungskammer (16),
einer um eine Drehachse (A) drehbar antreibbaren Laufradwelle (15),
einem an einem innerhalb der Strömungskammer (16) liegenden Ende der Laufradwelle (15) befestigten Laufrad (18),
einem Saugstutzen (8), und mit wenigstens einem temperierbaren Gehäuseteil (3), wobei das wenigstens eine temperierbare Gehäuseteil (3) eine das temperierbare Medium berührende erste Wandung (27) und eine von der ersten Wandung (27) beabstandete zweite Wandung (28) aufweist,
die erste Wandung (27) und die zweite Wandung (28) eine Temperierkammer (29) zum Temperieren des Gehäuseteils (3) bilden,
in der Temperierkammer (29) eine Vielzahl von Streben (31) vorgesehen sind, welche die erste Wandung (27) mit der zweiten Wandung (28) verbinden und im Wesentlichen konzentrisch zur Drehachse (A) angeordnete kreisartig verlaufende Kanäle (32) bilden,
in der Temperierkammer (29) eine erste Sammelkammer (34) und eine zweite Sammelkammer (35) ausgebildet sind,
die erste Sammelkammer (34) und die zweite Sammelkammer (35) über die Kanäle (32) fluidtechnisch miteinander in Verbindung stehen,
eine erste Anschlussvorrichtung (37) vorgesehen ist, über die ein Kühl- oder Heizmedium zum Temperieren des Gehäuseteils (3) in die erste Sammelkammer (34) der Temperierkammer (29) einströmt, und
eine zweite Anschlussvorrichtung (38) vorgesehen ist, über die das Kühl- oder Heizmedium aus der zweiten Sammelkammer (35) der Temperierkammer (29) wieder ausströmt,
**dadurch gekennzeichnet, dass**
die Sammelkammern beginnend von einem Bereich nahe des Saugstutzens (8) eine im Wesentlichen radiale Ausdehnung aufweisen.

2. Pumpenanordnung (1) nach Anspruch 1, **dadurch gekennzeichnet, dass** durch eine Unterbrechung der Streben (31) eine dritte Sammelkammer (36) ausgebildet ist.

3. Pumpenanordnung (1) nach Anspruch 2, **dadurch gekennzeichnet, dass** das temperierbare Bauteil (3) eine mit der dritten Sammelkammer (36) verbundene dritte Anschlussvorrichtung (39) aufweist, die für die vollständige Entleerung der Temperierkammer (29) vorgesehen ist.

4. Pumpenanordnung (1) nach einem der Ansprüche 1 bis 3, **dadurch gekennzeichnet, dass** die Kanäle (32) eine definierte Strukturierung aufweisen, die zur Maximierung von Turbulenzen in dem Kühl- oder Heizmedium und somit zur Maximierung des Wärmeaustauschs dient.

5. Pumpenanordnung (1) nach einem der Ansprüche 1 bis 4, **dadurch gekennzeichnet, dass** das Hydraulikgehäuse (3) eine Stützstruktur (41) aufweist.

6. Pumpenanordnung (1) nach Anspruch 5, **dadurch gekennzeichnet, dass** die Stützstruktur (41) definierte Bauelemente des Hydraulikgehäuses (3) miteinander verbindet, insbesondere Gehäusefüße (43), Saugstutzen (8), Druckstutzen (10) und Verbindungsstellen (44), an welche weitere Bauteile der Pumpenanordnung (1) befestigbar sind.

7. Pumpenanordnung (1) nach einem der Ansprüche 5 oder 6, 7, **dadurch gekennzeichnet, dass** die Stützstruktur (41) im Wesentlichen horizontal, vertikal und diagonal verlaufende Materialanhäufungen aufweist, die Knoten- oder Kreuzungspunkte (45) bilden.

8. Pumpenanordnung (1) nach einem der Ansprüche 5 bis 7, **dadurch gekennzeichnet, dass** freie Enden (46) der Stützstruktur (41) zur Aufnahme von geeigneten Befestigungsmitteln, insbesondere Schrauben oder Gewindebolzen, Sacklöcher (47) aufweisen.

9. Verfahren zur Herstellung eines temperierbaren Gehäuseteiles (3) für eine Pumpenanordnung (1) nach einem der vorhergehenden Ansprüche, als einstückiges Bauteil mittels 3D-Drucks.

## Claims

1. Pump arrangement (1) for conveying media which can be conveyed at certain temperatures, having a flow chamber (16) formed by a hydraulic casing (3) and a casing cover (4), an impeller shaft (15) which is drivable rotatably about an axis of rotation (A), an impeller (18) fastened to an end of the impeller shaft (15) located within the flow chamber (16), a suction pipe (8), and having at least one temperature-controllable casing part (3), wherein the at least one temperature-controllable casing part (3) comprises a first wall (27) which is in contact with the temperature-controllable medium and a second wall (28) which is at a distance from the first wall (27), the first wall (27) and the second wall (28) form a temperature-control chamber (29) for controlling the temperature of the casing part (3), in the temperature-control chamber (29), a plurality of struts (31) are provided which connect the first wall (27) to the second wall (28) and form channels (32) extending in a circular shape arranged substantially concentrically with the axis of rotation (A), in the temperature-control chamber (29), a first collection chamber (34) and a second collection chamber (35) are formed, the first collection chamber (34) and the second collection chamber (35) are connected fluidically to each other via the channels (32), a first connecting device (37) is provided, by means of which a cooling or heating medium flows into the first collection chamber (34) of the temperature-control chamber (29) in order to control the temperature of the casing part (3), and a second connecting device (38) is provided, by means of which the cooling or heating medium flows back out of the second collection chamber (35) of the temperature-control chamber (29), **characterized in that** the collection chambers, starting from a region close to the suction pipe (8), comprise a substantially radial extension.

2. Pump arrangement (1) according to Claim 1, **characterized in that** a third collection chamber (36) is formed by an interruption of the struts (31).

3. Pump arrangement (1) according to Claim 2, **characterized in that** the temperature-controllable component (3) comprises a third connecting device (39) which is connected to the third collection chamber (36) and is provided to completely empty the temperature-control chamber (29).

4. Pump arrangement (1) according to any of Claims 1 to 3, **characterized in that** the channels (32) comprise a defined structure which is used to maximize turbulence in the cooling or heating medium and thus to maximize the heat exchange.

5. Pump arrangement (1) according to any of Claims 1 to 4, **characterized in that** the hydraulic casing (3) comprises a support structure (41).

6. Pump arrangement (1) according to Claim 5, **characterized in that** the support structure (41) interconnects defined construction elements of the hydraulic casing (3), in particular casing feet (43), suction pipes (8), pressure pipes (10) and connection points (44), to which additional components of the pump arrangement (1) can be fixed.

7. Pump arrangement (1) according to either of Claims 5 or 6, **characterized in that** the support structure (41) comprises substantially horizontally, vertically and diagonally extending accumulations of material which form interconnection or intersection points (45).

8. Pump arrangement (1) according to any of Claims 5 to 7, **characterized in that** free ends (46) of the support structure (41) comprise blind holes (47) for receiving suitable fixing means, in particular screws or threaded bolts.

9. Method for producing a temperature-controllable casing part (3) for a pump arrangement (1) according to any of the preceding claims, as an integral component by means of 3D-printing.

## Revendications

1. Agencement de pompe (1) pour le transport de fluides pouvant être transportés à des températures déterminées, avec
une chambre d'écoulement (16) formée par un boîtier hydraulique (3) et un couvercle de boîtier (4),
un arbre de roue mobile (15) pouvant être entraîné en rotation autour d'un axe de rotation (A),
une roue mobile (18) fixée à une extrémité de l'arbre de roue mobile (15) située à l'intérieur de la chambre d'écoulement (16),
une tubulure d'aspiration (8), et avec
au moins une partie de boîtier (3) pouvant être conditionnée en température,
l'au moins une partie de boîtier (3) pouvant être conditionnée en température présentant une première paroi (27) en contact avec le fluide pouvant être conditionné en température et une deuxième paroi (28) espacée de la première paroi (27),
la première paroi (27) et la deuxième paroi (28) formant une chambre de conditionnement en température (29) pour conditionner en température la partie de boîtier (3), dans la chambre de conditionnement en température (29), il étant prévu une pluralité d'entretoises (31) qui relient la première paroi (27) à la deuxième paroi (28) et qui forment des canaux circulaires (32) agencés de manière essentiellement concentrique à l'axe de rotation (A),
une première chambre collectrice (34) et une deuxième chambre collectrice (35) étant réalisées dans la chambre de conditionnement en température (29),
la première chambre collectrice (34) et la deuxième chambre collectrice (35) étant en liaison fluidique entre elles par l'intermédiaire des canaux (32),
un premier dispositif de raccordement (37) étant prévu, par l'intermédiaire duquel un fluide de refroidissement ou de chauffage pour le conditionnement en température de la partie de boîtier (3) s'écoule dans la première chambre collectrice (34) de la chambre de conditionnement en température (29), et
un deuxième dispositif de raccordement (38) étant prévu, par l'intermédiaire duquel le fluide de refroidissement ou de chauffage s'écoule à nouveau hors de la deuxième chambre collectrice (35) de la chambre de conditionnement en température (29),
**caractérisé en ce que**
les chambres collectrices présentent une extension essentiellement radiale en commençant par une zone proche de la tubulure d'aspiration (8).

2. Agencement de pompe (1) selon la revendication 1, **caractérisé en ce qu'**une troisième chambre collectrice (36) est réalisée par une interruption des entretoises (31) .

3. Agencement de pompe (1) selon la revendication 2, **caractérisé en ce que** le composant (3) pouvant être conditionné en température présente un troisième dispositif de raccordement (39) relié à la troisième chambre collectrice (36), qui est prévu pour vider complètement la chambre de conditionnement en température (29) .

4. Agencement de pompe (1) selon l'une quelconque des revendications 1 à 3, **caractérisé en ce que** les canaux (32) présentent une structure définie qui sert à maximiser les turbulences dans le fluide de refroidissement ou de chauffage et donc à maximiser l'échange de chaleur.

5. Agencement de pompe (1) selon l'une quelconque des revendications 1 à 4, **caractérisé en ce que** le boîtier hydraulique (3) présente une structure de support (41).

6. Agencement de pompe (1) selon la revendication 5, **caractérisé en ce que** la structure de support (41) relie entre eux des éléments de construction définis du boîtier hydraulique (3), notamment des pieds de boîtier (43), des tubulures d'aspiration (8), des tubulures de refoulement (10) et des points de liaison (44) auxquels peuvent être fixés d'autres composants de l'agencement de pompe (1).

7. Agencement de pompe (1) selon l'une quelconque des revendications 5 ou 6, **caractérisé en ce que** la structure de support (41) présente des accumulations de matière s'étendant essentiellement horizontalement, verticalement et en diagonale, qui forment des points de jonction ou de croisement (45).

8. Agencement de pompe (1) selon l'une quelconque des revendications 5 à 7, **caractérisé en ce que** les extrémités libres (46) de la structure de support (41) présentent des trous borgnes (47) pour recevoir des moyens de fixation appropriés, notamment des vis ou des boulons filetés.

9. Procédé de fabrication d'une partie de boîtier (3) pouvant être conditionnée en température pour un agencement de pompe (1) selon l'une quelconque des revendications précédentes, en tant que composant monobloc par impression 3D.
